# FASCICULE DE BREVET EUROPEEN

(11) **EP 1 102 431 B1**
(45) Date de publication et mention de la délivrance du brevet: **03.01.2007**
(21) Numéro de dépôt: 00403149.8
(22) Date de dépôt: 13.11.2000
(51) Int. Cl.: H04L 12/24, H04L 12/18, H04L 12/64

(54) **Procédé et système de diffusion de données**
Verfahren und Vorrichtung für Daten-Rundfunk
Method and system for data broadcasting

(30) Priorité: 18.11.1999 FR 9914492
(43) Date de publication de la demande: 23.05.2001
(73) Titulaire: ALCATEL, 75008 Paris (FR)
(72) Inventeur: Messager, André, 94600 Choisy le Roi (FR); Bennai, Lahcen, 95100 Argenteuil (FR)
(74) Mandataire: Sciaux, Edmond

(56) Documents cités:
- EP-A- 0 598 969
- EP-A- 0 613 269
- US-A- 5 519 704
- ROUSSEAU M: "PROTOCOLES DE TRANSMISSION DE DONNEES X 25" MICRO SYSTEMES,FR,PARIS, no. 74, 1 avril 1987 (1987-04-01), pages 94-100, XP000571394 ISSN: 0183-5084

## Description

La présente invention concerne un procédé de transmission de données. L'invention est plus particulièrement destinée aux réseaux de type X25.

Ces réseaux comportent des terminaux qui sont :
- soit internes aux commutateurs,
- soit externes et reliés par des lignes à des circuits d'un commutateur

Les commutateurs de type X25 sont des équipements comportant essentiellement un circuit gestionnaire de paquets d'information (Packet Handler en Anglais) PH. Ce circuit PH, directement raccordé au réseau, est capable d'établir temporairement une liaison entre deux extrémités, d'assurer le transport de paquets d'informations entre ces deux extrémités, notamment par un contrôle de flux, et de libérer la liaison en fin de communication. Un service de type X25 peut ainsi être ouvert à des terminaux internes ou externes aux commutateurs.

Pour l'établissement temporaire de la liaison, une adresse d'un commutateur ou d'un terminal appelé, qui est présente dans un paquet d'appel issu d'un commutateur ou d'un terminal appelant, permet de router le paquet d'appel jusqu'au commutateur ou jusqu'au terminal appelé destinataire. Ce paquet d'appel contient de plus une indication de voie logique permettant d'identifier un circuit, dans le commutateur ou le terminal appelant, pour lui transmettre l'acceptation de l'appel par le commutateur ou le terminal appelé. Cette acceptation comporte elle-même une indication de voie logique à utiliser avec ce commutateur ou ce terminal appelé lors d'un transfert de données ultérieur. La libération de la liaison peut être provoquée par un paquet de libération, ou par une temporisation. Pendant la communication, l'échange des données sur les deux voies logiques constituant une liaison bidirectionnelle est un échange en mode paquet comme au moment de l'établissement de la liaison.

Pour la transmission, les terminaux internes accèdent au circuit PH au travers d'un module d'interface qui met en oeuvre une librairie de fonctions. Les fonctions de cette librairie permettent aux terminaux de gérer l'établissement de la liaison, le transfert des données et la libération de la liaison. Ce module d'interface assure en outre une fonction d'assemblage et de désassemblage en paquets X25 des blocs d'informations échangés entre les terminaux.

Un terminal requiert du module d'interface l'établissement d'un circuit virtuel (CV) de type X25 avec un terminal destinataire désigné par son adresse. Le module interface traduit cette requête en un paquet d'appel X25 envoyé au circuit PH du commutateur appelant. Le paquet d'appel X25 est routé jusqu'au circuit PH du commutateur distant, hôte du terminal destinataire. Une analyse, dans le commutateur appelé, de l'adresse appelée par le paquet d'appel permet de déterminer que le destinataire est ou non un terminal interne. Le cas échéant, le paquet d'appel est délivré au module interface du commutateur destinataire qui envoie un événement au terminal interne destinataire pour lui indiquer un appel entrant.

La réponse au module interface du terminal interne destinataire acceptant l'appel est transformée en un paquet X25 d'acceptation d'appel qui parcourt le trajet du paquet d'appel en sens inverse. Le terminal source, appelant, initiateur, est prévenu par un événement de l'établissement effectif de la liaison. Cette liaison est identifiée entre le module interface du commutateur appelant et le terminal par un numéro particulier de voie logique. Le terminal source établit alors une demande d'envoi d'un bloc d'informations au module interface en évoquant le numéro de voie logique. Ce bloc d'informations est fragmenté par le module interface en paquets de données X25 délivrés ensuite au circuit PH appelant. En réception, les paquets de données X25 sont réassemblés par l'autre module interface en un bloc d'informations délivré ensuite au terminal destinataire. La liaison est bidirectionnelle.

Dans un réseau de type X25, les commutateurs, ou routeurs, peuvent être configurés différemment selon des besoins géographiques ou temporels. Un commutateur à un niveau de réseau peut ainsi être mis en relation par des voies de transmission avec certains commutateurs voisins, et pas avec d'autres. La maintenance d'un tel réseau est naturellement effectuée par des terminaux internes, ou processus, mis en oeuvre dans chaque commutateur. Dans certains cas (par exemple diffusions de table de routage, déclarations de présence d'abonnés, transmission d'information concernant la configuration d'un commutateur ou de la liste des abonnés qui lui sont rattachés), l'accomplissement d'un processus nécessite de faire savoir à tous les autres commutateurs du réseau que la configuration de ce commutateur a changé, et ou que les autres commutateurs doivent se modifier en correspondance. L'acheminement de l'information correspondante est réalisé par un terminal de communication qui utilise le réseau, et le protocole X25.

Des informations à transmettre à tous les commutateurs peuvent également résulter de l'intervention d'un opérateur, personne physique, sur un terminal de service, externe, connecté à un commutateur. Les données à transmettre produites par les terminaux internes concernent la gestion du réseau. Dans le cas d'un processus automatique interne au commutateur, le terminal de transmission est un terminal interne utilisant le module interface, dans le cas d'un terminal externe le module interface n'est normalement pas sollicité.

Un tel mode de gestion entraîne que les terminaux doivent émettre autant de blocs d'informations qu'il y a de terminaux auxquels doit être adressée une information. Dans un réseau de type X25, il faut donc établir (successivement ou simultanément selon les possibilité du commutateur) autant de circuits virtuels qu'il y a de terminaux auxquels est adressée cette information. Lorsque ces informations sont communes à tous les commutateurs, par exemple la transmission d'une configuration générale dans le cas d'un terminal interne, le bloc d'informations doit être envoyé sur le réseau aussi souvent qu'il y a de terminaux destinataires à informer. Un tel mode de transmission est évidemment préoccupant en ce sens qu'il occupe le réseau d'une manière totalement inutile.

En outre un tel procédé est peu intéressant pour le module interface et le circuit PH initiateur car ceux-ci sont amenés à devoir consacrer trop de ressources à cette transmission, ressources qu'ils ne peuvent pas utiliser par ailleurs pour gérer au mieux le reste du réseau. Par ailleurs le caractère répétitif de ces bloc d'informations à transmettre à tous les commutateurs du réseau est particulièrement pénalisant de sorte qu'une part non négligeable des ressources de ce réseau est consacrée au maintien de son propre fonctionnement.

Le document **US 5.519.704** décrit un procédé pour diffuser un bloc d'information d'un premier terminal vers un ensemble de deuxièmes terminaux destinataires, chaque deuxième terminal étant connecté à un commutateur d'un réseau, consistant à :
- transmettre le bloc de données du premier terminal à un module de diffusion contenu dans un premier commutateur qui est relié directement à ce premier terminal,
- puis diffuser ce bloc de données de ce module de diffusion vers des commutateurs adjacents à ce premier commutateur, et vers des deuxièmes terminaux destinataires qui sont reliés directement à ce premier commutateur.

Ce procédé est décrit dans le cas de réseaux de transmission orientés sans connexion, mais n'est pas transposable directement dans des réseaux orientés connexion comme c'est le cas des réseau de type X25.

L'invention a pour but de remédier à ce problème en proposant un procédé de diffusion utilisable dans un réseau de type X25.

L'invention a pour premier objet un procédé de transmission de données dans lequel, pour diffuser un bloc d'informations d'un premier terminal vers un ensemble de deuxièmes terminaux destinataires, chaque deuxième terminal étant connecté à un commutateur d'un réseau, consistant à :
- transmettre le bloc d'informations du premier terminal à un module de diffusion contenu dans un premier commutateur qui est relié directement à ce premier terminal,
- diffuser ce bloc d'informations de ce module de diffusion vers des commutateurs adjacents à ce premier commutateur, et vers des deuxièmes terminaux destinataires qui sont reliés directement à ce premier commutateur,
- et recevoir ce bloc d'informations dans les deuxièmes terminaux destinataires,
**caractérisé** en ce que pour transmettre le bloc d'informations du premier terminal au module de diffusion, il consiste à :
- émettre un paquet de demande d'appel, du premier terminal vers le module de diffusion du premier commutateur, pour demander l'établissement d'un circuit virtuel de type X25, entre ce premier terminal et le module de diffusion du premier commutateur, en plaçant une requête de diffusion dans l'un des champs de ce paquet de demande d'appel ;
- et placer le bloc d'informations à diffuser, dans les paquets de données du circuit virtuel de type X25 qui a été établi entre ce premier terminal et le module de diffusion, en réponse à ce paquet de demande d'appel.

Le procédé ainsi caractérisé est mis en oeuvre dans des commutateurs qui comportent alors, de préférence, tous un module de diffusion. Un commutateur est dit adjacent d'un autre commutateur si une liaison peut être établie entre ces deux commutateurs sans l'intermédiaire d'un troisième commutateur. Un commutateur transmet à ses commutateurs adjacents tous les blocs d'informations qu'il reçoit et qui sont à diffuser aux terminaux. Les blocs d'informations à diffuser sont reconnus par le fait qu'ils sont adressés au module de diffusion du commutateur d'appel. L'adresse de ce module de diffusion constitue implicitement une requête de diffusion.

Selon l'invention un terminal interne ou un terminal externe, initiateur de la diffusion, établit un circuit virtuel unique avec le module de diffusion du commutateur auquel il est rattaché, et lui transmet une seule fois le bloc d'informations à diffuser. A la différence de la méthode utilisée dans les réseaux X25 connus, ce module de diffusion de ce commutateur propage alors le bloc d'informations à tous les modules de diffusion des commutateurs du réseau qui sont les voisins de ce commutateur. Il en résulte une propagation vers tous les commutateurs. En aval, chaque commutateur de réseau recevant le bloc d'informations peut le délivrer aux terminaux qui lui sont rattachés.

Cette technique de diffusion, dite par inondation, peut être perfectionnée en n'envoyant un bloc d'informations à diffuser d'un commutateur à un autre que si cet autre commutateur ne l'a pas déjà reçu par ailleurs. Connaissant le terminal ou le commutateur qui lui a transmis l'information à diffuser, un module de diffusion ne transmet pas à ce terminal ou à ce commutateur transmetteur le bloc d'informations à diffuser qu'il vient de recevoir de lui. Cette connaissance est assurée par le repérage de la voie logique par laquelle le service de diffusion a été invoqué. Le bloc d'informations n'arrive ainsi qu'une seule fois à chaque commutateur, et en particulier il ne circule pas dans toutes les mailles du réseau. Ceci réduit donc le débit global.

Une variante de ce procédée est **caractérisé** en ce que pour transmettre un bloc d'informations du premier terminal au module de diffusion, il consiste à :
- émettre un paquet de demande d'appel, du premier terminal vers le module de diffusion du premier commutateur, pour demander l'établissement d'un circuit virtuel de type X25, entre ce premier terminal et le module de diffusion du premier commutateur, en plaçant une requête de diffusion dans l'un des champs de ce paquet de demande d'appel ;
- et placer le bloc d'informations à diffuser, dans le champ de données utilisateur de ce paquet de demande d'appel.

L'invention a également pour objet un module de diffusion pour un réseau comportant des commutateurs de réseau et des terminaux connectés à ces commutateurs, ces commutateurs et ces terminaux étant aptes à établir entre eux des liaisons de type X25 pour transmettre des données ; ces commutateurs comportant des modules de diffusion qui reçoivent des paquets de données à diffuser à tous les terminaux d'un ensemble de terminaux, et dont la fonction est de transmettre ces données à diffuser à tous les commutateurs qui leur sont adjacents dans le réseau, et à tous les terminaux qui leurs sont respectivement reliés directement ;
**caractérisé** en ce qu'il comporte :
- des moyens pour recevoir un paquet de demande d'appel, émis par un premier terminal vers ce module de diffusion, reconnaître une requête de diffusion dans l'un des champs de ce paquet de demande d'appel, et pour établir alors un circuit virtuel de type X25, entre ce premier terminal et le module de diffusion ;
- et des moyens pour mémoriser puis diffuser un bloc d'informations à diffuser qui a été placé dans les paquets de données du circuit virtuel de type X25 qui a été établi entre ce premier terminal et le module de diffusion.

Selon une variante, un module de diffusion est **caractérisé** en ce qu'il comporte :
- des moyens pour recevoir un paquet de demande d'appel, émis par un premier terminal vers ce module de diffusion, reconnaître une requête de diffusion dans l'un des champs de ce paquet de demande d'appel,
- et des moyens pour mémoriser puis diffuser un bloc d'informations à diffuser qui a été placé dans le champ de données utilisateur de ce paquet de demande d'appel.

L'invention a également pour objet un terminal pour un réseau comportant des commutateurs de réseau et des terminaux connectés à ces commutateurs, ces commutateurs et ces terminaux étant aptes à établir entre eux des liaisons de type X25 pour transmettre des données, des commutateurs comportant des modules de diffusion qui reçoivent des données à diffuser à tous les terminaux d'un ensemble de terminaux et dont la fonction est de transmettre ces données à diffuser à tous les commutateurs qui leur sont adjacents dans le réseau ; **caractérisé** en ce qu'il comporte des moyens pour :
- émettre un paquet de demande d'appel, de ce premier terminal vers le module de diffusion d'un premier commutateur, pour demander l'établissement d'un circuit virtuel de type X25, entre ce premier terminal et le module de diffusion du premier commutateur, en plaçant une requête de diffusion dans l'un des champs de ce paquet de demande d'appel ;
- et placer le bloc d'informations à diffuser, dans les paquets de données du circuit virtuel de type X25 qui est alors établi entre ce premier terminal et le module de diffusion.

Selon une variante un terminal est **caractérisé** en ce qu'il comporte des moyens pour:
- émettre un paquet de demande d'appel, de ce premier terminal vers le module de diffusion d'un premier commutateur, pour demander l'établissement d'un circuit virtuel de type X25, entre ce premier terminal et le module de diffusion du premier commutateur, en plaçant une requête de diffusion dans l'un des champs de ce paquet de demande d'appel ;
- et placer le bloc d'informations à diffuser, dans le champ de données utilisateur de ce paquet de demande d'appel.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un réseau de type X25 utilisable pour mettre en oeuvre le procédé de l'invention ;
- Figures 2a et 2b : des modes de transmission des blocs d'informations émis par les terminaux selon l'état de la technique et selon le procédé de l'invention respectivement;
- Figure 3 : une représentation schématique d'un programme mis en oeuvre dans chaque commutateur du réseau.

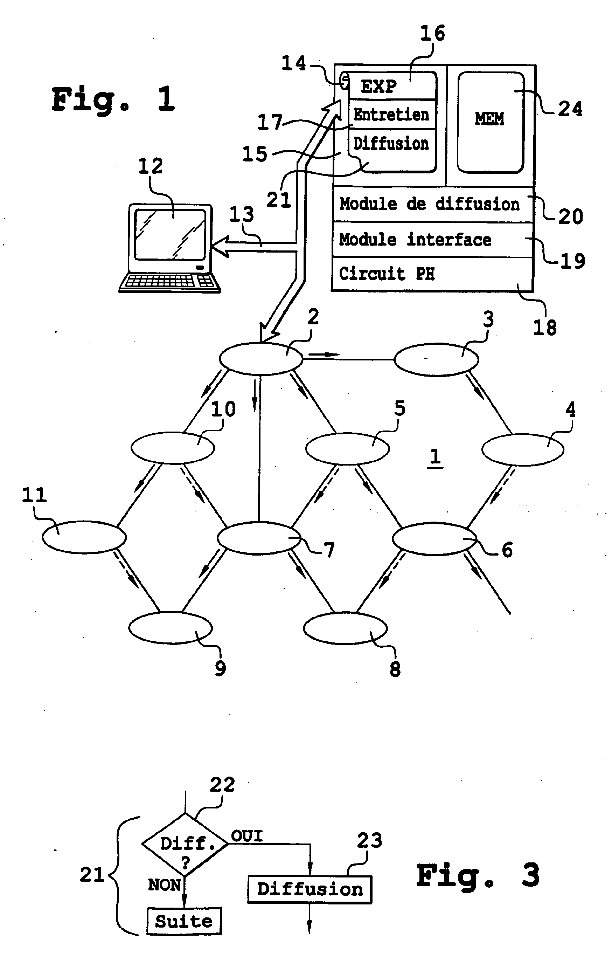

La **figure 1** montre un réseau 1 utilisable pour mettre en oeuvre des terminaux de type X25 dans le cadre du procédé de l'invention. Ce réseau comporte un ensemble de commutateurs tels que 2 à 11. Les commutateurs sont reliés entre eux par des liaisons formant par exemple un réseau maillé, plusieurs chemins pouvant être utilisables pour relier un commutateur à un autre. Les circuits de ces commutateurs peuvent lancer des processus automatiques, dits terminaux internes. Dans un commutateur particulier 2, situé par exemple dans un local occupé par un administrateur de réseau, opérateur personne physique du système, peut être disposé par ailleurs un terminal externe de service 12 relié par un bus 13 au commutateur 2. D'autres terminaux, par exemple du même type que le terminal 12, peuvent être reliés aux autres commutateurs ou bien ils peuvent comporter un autre type d'équipement.

Le commutateur 2 est globalement représenté. Il comporte en pratique des circuits de commutation, de formatage par mise en paquet, de mémorisation, de synchronisation et autres pour transmettre des blocs informations reçus à d'autres commutateurs ou à d'autres terminaux. Un terminal interne au commutateur 2 est destiné à effectuer l'entretien du réseau 1. Dans ce but un des équipements du commutateur 2 comporte un programme 14 dans une mémoire programme 15. Le programme 14 est capable de mettre en oeuvre un système d'exploitation 16 et notamment des applications ou terminaux 17 d'entretien du réseau 1. Ces terminaux 17 ont pour objet de modifier la configuration du commutateur 2 et ou de transmettre des informations correspondantes aux autres commutateurs 3 à 11. Le commutateur 2 comporte dans ce but des circuits 18 de type PH de gestion de paquets d'information. Il comporte également d'une manière connue un module interface 19 interposé entre un terminal interne représenté par un programme 17 contenu dans la mémoire 15 et le circuit 18. Le terminal externe 12 est normalement relié par le bus 13 au circuit 18.

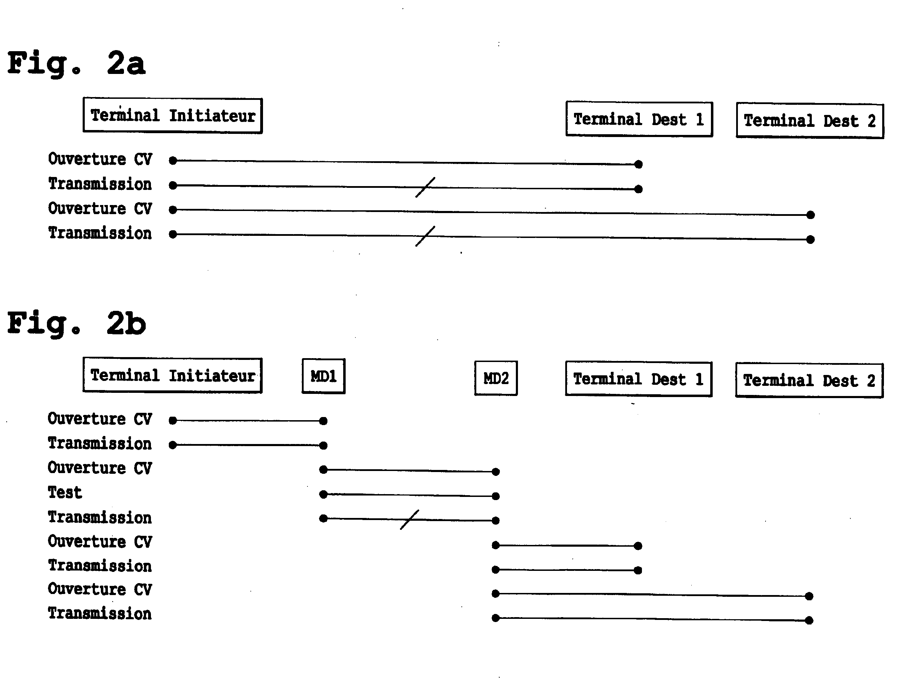

La **figure 2a** montre d'une manière schématique, dans l'état de la technique, un envoi d'un bloc d'informations d'information à une multitude de terminaux, internes ou externes, reliés aux commutateurs 2 à 11 du réseau. L'envoi de chaque bloc d'informations comporte une première étape d'établissement d'un circuit virtuel entre le terminal appelant et un terminal destinataire. Cet établissement est réalisé par le circuit interface pour les terminaux internes ou bien il est réalisé par les terminaux externes eux-mêmes. L'envoi du bloc d'informations se produit ultérieurement au cours d'une deuxième étape de transmission. Ces deux étapes doivent être réitérées pour chaque transmission différente entre le terminal initiateur et l'un quelconque des terminaux destinataires. Les blocs d'informations tous identiques de la figure 2a encombrent donc le réseau par leurs transmissions multiples aux terminaux auxquels ils sont destinés. Les blocs d'informations représentés sont ceux transmis sur des voies logiques établies dans les commutateurs reliés au terminal initiateur et aux terminaux destinataires. La figure 2a montre schématiquement que pour joindre deux terminaux, la liaison d'un commutateur à un autre commutateur est utilisée deux fois. Tout comme pour l'invention, cette liaison peut par ailleurs être de type quelconque, être supporté par un réseau quelconque. Il reste qu'elle subit ici un trafic multiple.

La **figure 2b** montre d'une manière schématique la modification apportée par le procédé de l'invention. Pour un bloc d'informations à diffuser, un terminal 12 initiateur, ici externe dans l'exemple, requiert l'établissement d'un circuit virtuel de type X25, en envoyant un paquet de demande d'appel au module de diffusion 20 du commutateur 2 auquel il est relié directement. On remarquera que ce circuit virtuel le reliera non pas avec un des terminaux destinataires du bloc d'informations à diffuser, mais avec le module de diffusion 20 du commutateur 2 auquel ce terminal initiateur est relié.

Le terminal 12 transmet ensuite le bloc d'informations à diffuser, via le circuit virtuel établi à la suite de cette requête du terminal 12, sous la forme d'une pluralité de paquets de données conformes au protocole X25, si le bloc d'informations est trop volumineux pour être contenu dans un seul paquet de données. Un bit (prévu dans chaque paquet par le protocole X25) indique s'il y a encore un paquet ensuite, ou indique si c'est le dernier paquet constituant le bloc d'informations. Le circuit virtuel est libéré à la demande du terminal initiateur 12 lorsqu'il a fini de transmettre le bloc d'informations à diffuser, ou, à défaut, par l'action d'un temporisateur situé dans le module de diffusion 20.

Conformément au protocole X25, l'adresse du module de diffusion est placée dans le paquet d'appel. Cette adresse est une adresse générique qui constitue aussi implicitement une requête de diffusion. Elle signifie, dans ce cas, que l'information reçue ultérieurement via le circuit établi à la suite de la requête portée par ce paquet d'appel est une information à diffuser.

Selon d'autres modes de mise en oeuvre, la requête de diffusion peut être constituée explicitement par un mot binaire appelé code de diffusion placé dans l'un quelconque des champs du paquet de demande d'appel.

Selon une variante du procédé selon l'invention, utilisable pour des blocs d'informations de petit volume, un bloc d'informations à diffuser est placé dans le paquet de demande d'appel lui-même. Il n'y a pas lieu d'établir réellement un circuit virtuel dans ce cas.

Le module 20 est doté d'une mémoire permettant de mémoriser un tel bloc d'informations à diffuser. A priori, il n'y a pas d'échange immédiat en retour entre les terminaux initiateur et destinataires. Puis le module de diffusion 20 diffuse le bloc d'informations mémorisé. Ainsi, un module de diffusion MD1 d'un commutateur de départ transmet un bloc d'informations à diffuser à un module de diffusion MD2 d'un commutateur d'arrivée qui lui est directement adjacent. La transmission entre les deux modules MD1 et MD2 est une liaison de type X25, avec établissement d'un circuit virtuel entre les deux modules MD1 et MD2.

Le module MD2 mémorise à son tour le bloc d'informations à diffuser. Il transmet ensuite le bloc d'informations d'une part aux terminaux destinataires Dest1 et Dest2 qui sont reliés à son commutateur. Le module de diffusion MD2 transmet ensuite le bloc d'informations aux autres commutateurs qui lui sont adjacents, et qui sont différents du commutateur de départ.

On constate alors que la liaison entre le commutateur du module de diffusion MD1 et celui du module de diffusion MD2 n'est utilisée qu'une seule fois, bien que le bloc d'informations soit transmis à deux destinataires Dest1 et Dest2 reliés au commutateur du module MD2. L'opération d'établissement du circuit virtuel du terminal initiateur au module de diffusion MD1 n'est réalisée qu'une fois. Par contre, chaque module de diffusion MD2 qui reçoit le bloc d'informations à diffuser ouvre autant de circuits virtuels qu'il y de terminaux reliés à son commutateur.

Si le terminal initiateur est interne à un commutateur, l'édition du bloc d'informations à diffuser se termine par l'invocation du module de diffusion (en remplacement du module interface) et ce module de diffusion transmet les informations à diffuser comme ci-dessus, après établissement du circuit virtuel.

Le module de diffusion MD1 peut inclure dans chacun des blocs d'informations à diffuser un numéro d'ordre R. Eventuellement le module de diffusion MD1 peut inclure en outre l'identification du terminal initiateur, au cas où plusieurs terminaux internes ou externes, rattachés à un même commutateur, seraient aptes à effectuer des opérations de diffusion comme le terminal 12.

Les terminaux initiateurs peuvent par ailleurs inclure, dans le bloc d'informations à diffuser, un code C dit de catégorie, permettant une diffusion sélective des blocs d'informations. Seuls les terminaux correspondants à cette catégorie C recevront le bloc d'informations à diffuser. Le numéro d'ordre R et le code de catégorie C peuvent être placés dans le paquet d'appel.

La **figure 3** montre en détail le fonctionnement du procédé de l'invention. Le programme 14, figure 1, comporte un sous-programme 21 de diffusion. Ce sous-programme 21 est schématiquement représenté sur la figure 3. Ce sous-programme 21 de diffusion comporte pour l'essentiel un test 22 pour vérifier que l'adresse du destinataire est une adresse DIFF du module de diffusion du commutateur de départ. De préférence cette adresse sera une adresse générique, chaque module de diffusion d'un commutateur étant appelable par cette adresse à partir d'un quelconque des modules de diffusion adjacents, ou pouvant en appeler un autre par cette adresse. Si l'adresse est différente, par exemple ADR ou autre signalant que le bloc d'informations doit être acheminé à un terminal particulier, la transmission se produit par la suite normalement.

Par contre, si l'adresse du paquet d'appel correspond à celle DIFF du module de diffusion, le sous-programme 21 met en oeuvre, en plus du test 22, une macro-instruction 23 représentant le module de diffusion 20. Une telle macro-instruction 23 a d'abord pour objet de faire transmettre par un commutateur récepteur (2 ici) à tous les commutateurs adjacents en aval un bloc d'informations à diffuser que ce commutateur récepteur vient de recevoir d'un commutateur amont (ou d'un terminal de service externe). Par exemple le commutateur 2 transmet le bloc d'informations à diffuser au commutateur 3, au commutateur 5, au commutateur 7 et au commutateur 10.

Dans la pratique, ces commutateurs adjacents avals sont physiquement reliés à des entrées activées de ce commutateur 2 amont. Donc le commutateur 2 sait, parce que cette information a été acquise, et éventuellement mémorisée dans une mémoire 24 au moment de la constitution du réseau, que les commutateurs 3, 5, 7 et 10 sont ses voisins adjacents. La mémoire 24 comporte également la liste des terminaux internes ou externes qui sont connectés à ce commutateur. Ces terminaux connectés peuvent alors recevoir de leur commutateur de connexion l'information à leur diffuser

Selon l'invention, chaque commutateur effectue donc la transmission du bloc d'informations à diffuser à un chacun des commutateurs adjacents, par exemple ici du commutateur 3 au commutateur 4. De même le commutateur 5 transmettra le bloc d'informations à diffuser au commutateur 6. On remarquera que le commutateur 4 pourrait être également amené à transmettre un même bloc d'informations à diffuser au commutateur 6. De manière à éviter une telle répétition, de préférence, avant d'envoyer un bloc d'informations à un commutateur voisin, un commutateur par exemple le commutateur 4, peut interroger ses voisins, ici le commutateur 6, pour savoir si ce commutateur 6 a déjà reçu le bloc d'informations qu'il s'apprête à lui transmettre.

Pour cela, le commutateur 4 signale au commutateur 6 qu'il a l'intention de lui transmettre le bloc d'informations de rang R ou dont l'identité est codée. Cette signalisation peut être réalisée par un paquet d'appel comportant d'une part l'adresse générique d'un module de diffusion (DIFF) et d'autre part le rang R du bloc d'informations à diffuser. Le commutateur 5 ayant déjà transmis au commutateur 6 le bloc d'informations de rang R, le commutateur 6 pourra répondre au commutateur 4, de préférence dans un paquet de données, que le bloc d'informations de rang R a déjà été reçu. Le paquet de données en réponse sera dans ce cas un paquet de refus et la transmission de ce bloc d'informations de rang R ne sera pas effectuée depuis le commutateur 4. Cette consultation préalable est bien entendu très courte. Elle s'apparente à une liaison de signalisation et n'occupe pas particulièrement le lien entre le commutateur 4 et le commutateur 6.

En outre, le module de diffusion transmets le bloc d'informations à diffuser à tous les terminaux, internes ou externes, qui sont directement connectés au commutateur de ce module de diffusion, c'est-à-dire qui lui sont connectés sans l'intermédiaire d'un autre commutateur. Cette diffusion se produit aussi bien entendu pour le commutateur de départ vis à vis des autres terminaux reliés à ce commutateur de départ.

La diffusion ne se produit pas vers le commutateur ou le terminal qui vient de transmettre le bloc d'informations à diffuser car cette transmission s'est réalisée par une voie logique qui permet d'identifier l'organe transmetteur et de ne pas lui renvoyer ce que lui-même vient d'envoyer.

Au besoin le paquet d'appel, ou une zone dans le bloc d'informations à diffuser, désigne les terminaux ou les catégories de terminaux qui sont destinés à recevoir le bloc d'informations à diffuser. A ce titre, le paquet d'appel servant pour le test 22 peut comporter l'information C de catégorie que le module de diffusion du commutateur adjacent récepteur détecte. Cette information de catégorie est de préférence une information de la catégorie du terminal initiateur lui-même. Ce module de diffusion transmet alors ce bloc d'informations à diffuser aux terminaux qui lui sont connectés si la catégorie C leur correspond.

En variante, la catégorie peut être constituée par l'adresse d'un terminal. De ce fait, seul le terminal destinataire reçoit le bloc d'informations prétendument à diffuser. En agissant ainsi, on pourrait envoyer par l'intermédiaire du module de diffusion un bloc d'informations à un seul terminal.

## Revendications

1. Procédé de transmission de données dans lequel, pour diffuser un bloc d'information d'un premier terminal (12) vers un ensemble de deuxièmes terminaux destinataires, chaque deuxième terminal étant connecté à un commutateur (2 à 11) d'un réseau, consistant à :
- transmettre le bloc d'informations du premier terminal à un module de diffusion (20) contenu dans un premier commutateur (2) qui est relié directement à ce premier terminal,
- diffuser ce bloc d'informations de ce module de diffusion vers des commutateurs (3 à 11) adjacents à ce premier commutateur, et vers des deuxièmes terminaux destinataires qui sont reliés directement à ce premier commutateur,
- et recevoir ce bloc d'informations dans les deuxièmes terminaux destinataires,
**caractérisé en ce que** pour transmettre un bloc d'informations du premier terminal au module de diffusion, il consiste à :
- émettre un paquet de demande d'appel, du premier terminal (12) vers le module de diffusion (20) du premier commutateur (2), pour demander l'établissement d'un circuit virtuel de type X25, entre ce premier terminal (12) et le module de diffusion (20) du premier commutateur (2), en plaçant une requête de diffusion dans l'un des champs de ce paquet de demande d'appel ;
- et placer le bloc d'informations à diffuser, dans les paquets de données du circuit virtuel de type X25 qui a été établi entre ce premier terminal et le module de diffusion, en réponse à ce paquet de demande d'appel.

2. Procédé de transmission de données dans lequel, pour diffuser un bloc d'informations d'un premier terminal (12) vers un ensemble de deuxièmes terminaux destinataires, chaque deuxième terminal étant connecté à un commutateur (2 à 11) d'un réseau, consistant à :
- transmettre le bloc d'informations du premier terminal à un module de diffusion (20) contenu dans un premier commutateur (2) qui est relié directement à ce premier terminal,
- diffuser ce bloc d'informations de ce module de diffusion vers des commutateurs (3 à 11) adjacents à ce premier commutateur, et vers des deuxièmes terminaux destinataires qui sont reliés directement à ce premier commutateur,
- et recevoir ce bloc d'informations dans les deuxièmes terminaux destinataires,
**caractérisé en ce que** pour transmettre un bloc d'informations du premier terminal au module de diffusion, il consiste à :
- émettre un paquet de demande d'appel, du premier terminal (12) vers le module de diffusion (20) du premier commutateur (2), pour demander l'établissement d'un circuit virtuel de type X25, entre ce premier terminal (12) et le module de diffusion (20) du premier commutateur (2), en plaçant une requête de diffusion dans l'un des champs de ce paquet de demande d'appel ;
- et placer le bloc d'informations à diffuser, dans le champ de données utilisateur de ce paquet de demande d'appel.

3. Procédé selon l'une des revendications 1 ou 2, **caractérisé en ce qu'**il consiste en outre à établir une liaison de type X25 entre le module de diffusion (20) du premier commutateur (2) et chacun des module de diffusion des commutateurs adjacents (3 à 11).

4. Procédé selon l'une des revendications 1 à 3, **caractérisé en ce que** le module de diffusion (20) de chaque commutateur teste si un commutateur adjacent a déjà reçu un bloc d'informations à diffuser, avant de le lui envoyer.

5. Procédé selon l'une des revendications 1 à 4, **caractérisé en ce qu'**il consiste à diffuser un bloc d'informations à un deuxième terminal relié à un commutateur adjacent au premier commutateur, si et seulement si ce deuxième terminal appartient à une catégorie attendue.

6. Procédé selon l'une des revendications 1 à 4, **caractérisé en ce qu'**il consiste à diffuser un bloc d'informations à un deuxième terminal relié directement au premier commutateur, si et seulement si ce deuxième terminal appartient à une catégorie attendue.

7. Procédé selon l'une des revendications 5 à 6, **caractérisé en ce que** la catégorie attendue est celle à laquelle appartient le premier terminal.

8. Procédé selon l'une des revendications 5 à 6, **caractérisé en ce qu'**il consiste en outre à émettre du premier terminal vers le commutateur auquel il est relié, un message indiquant la catégorie à laquelle appartient ce premier terminal.

9. Procédé selon l'une des revendications 1 à 8, **caractérisé en ce qu'**au moins un des terminaux est externe par rapport aux commutateurs (2 à 11).

10. Module de diffusion (20) pour un réseau comportant des commutateurs de réseau (2 à 11) et des terminaux (12) connectés à ces commutateurs, ces commutateurs et ces terminaux étant aptes à établir entre eux des liaisons de type X25 pour transmettre des données ; ces commutateurs comportant des modules de diffusion qui reçoivent des blocs d'information à diffuser à tous les terminaux d'un ensemble de terminaux, et dont la fonction est de transmettre ces blocs d'informations à tous les commutateurs qui leur sont adjacents dans le réseau, et à tous les terminaux qui leurs sont respectivement reliés directement ;
**caractérisé en ce qu'**il comporte :
- des moyens pour recevoir un paquet de demande d'appel, émis par un premier terminal (12) vers ce module de diffusion (20), reconnaître une requête de diffusion dans l'un des champs de ce paquet de demande d'appel, et pour établir alors un circuit virtuel de type X25, entre ce premier terminal (12) et le module de diffusion (20);
- et des moyens pour mémoriser puis diffuser un bloc d'informations à diffuser qui a été placé dans les paquets de données du circuit virtuel de type X25 qui a été établi entre ce premier terminal et le module de diffusion.

11. Module de diffusion (20) pour un réseau comportant des commutateurs de réseau (2 à 11) et des terminaux (12) connectés à ces commutateurs, ces commutateurs et ces terminaux étant aptes à établir entre eux des liaisons de type X25 pour transmettre des données ; ces commutateurs comportant des modules de diffusion qui reçoivent des blocs d'information à diffuser à tous les terminaux d'un ensemble de terminaux, et dont la fonction est de transmettre ces blocs d'informations à tous les commutateurs qui leur sont adjacents dans le réseau, et à tous les terminaux qui leurs sont respectivement reliés directement;
**caractérisé en ce qu'**il comporte :
- des moyens pour recevoir un paquet de demande d'appel, émis par un premier terminal (12) vers ce module de diffusion (20), reconnaître une requête de diffusion dans l'un des champs de ce paquet de demande d'appel,
- et des moyens pour mémoriser puis diffuser un bloc d'informations à diffuser qui a été placé dans le champ de données utilisateur de ce paquet de demande d'appel.

12. Module de diffusion selon la revendication 10 ou la revendication 11, **caractérisé en ce qu'**il comporte en outre des moyens pour déterminer si un commutateur adjacent au commutateur auquel il appartient a déjà reçu ce bloc d'informations à diffuser.

13. Terminal pour un réseau comportant des commutateurs de réseau et des terminaux connectés à ces commutateurs, ces commutateurs et ces terminaux étant aptes à établir entre eux des liaisons de type X25 pour transmettre des données, des commutateurs comportant des modules de diffusion qui reçoivent des données à diffuser à tous les terminaux d'un ensemble de terminaux et dont la fonction est de transmettre ces données à diffuser à tous les commutateurs qui leur sont adjacents dans le réseau ;
**caractérisé en ce qu'**il comporte des moyens pour :
- émettre un paquet de demande d'appel, de ce premier terminal (12) vers le module de diffusion (20) d'un premier commutateur (2), pour demander l'établissement d'un circuit virtuel de type X25, entre ce premier terminal (12) et le module de diffusion (20) du premier commutateur (2), en plaçant une requête de diffusion dans l'un des champs de ce paquet de demande d'appel ;
- et placer le bloc d'informations à diffuser, dans les paquets de données du circuit virtuel de type X25 qui est alors établi entre ce premier terminal et le module de diffusion.

14. Terminal pour un réseau comportant des commutateurs de réseau et des terminaux connectés à ces commutateurs, ces commutateurs et ces terminaux étant aptes à établir entre eux des liaisons de type X25 pour transmettre des données, des commutateurs comportant des modules de diffusion qui reçoivent des données à diffuser à tous les terminaux d'un ensemble de terminaux et dont la fonction est de transmettre ces données à diffuser à tous les commutateurs qui leur sont adjacents dans le réseau ;
**caractérisé en ce qu'**il comporte des moyens pour :
- émettre un paquet de demande d'appel, de ce premier terminal (12) vers le module de diffusion (20) d'un premier commutateur (2), pour demander l'établissement d'un circuit virtuel de type X25, entre ce premier terminal (12) et le module de diffusion (20) du premier commutateur (2), en plaçant une requête de diffusion dans l'un des champs de ce paquet de demande d'appel ;
- et placer le bloc d'informations à diffuser, dans le champ de données utilisateur de ce paquet de demande d'appel.

## Claims

1. A method of transmitting data in which, to broadcast a block of information from a first terminal (12) to a set of destination second terminals, each of which second terminals is connected to a switch (2 to 11) of a network, the method consists of:
· transmitting the block of information from the first terminal to a broadcast module (20) in a first switch (2) which is connected directly to said first terminal,
· broadcasting said block of information from said broadcast module to switches (3 to 11) adjacent said first switch and to destination second terminals which are connected directly to said first switch, and
receiving said block of information in the destination second terminals,
**characterized in that**, to transmit a block of information from the first terminal to the broadcast module, the method further consists of:
sending a call request packet from the first terminal (12) to the broadcast module (20) of the first switch (2) to request the setting up of an X.25 virtual circuit between said first terminal (12) and the broadcast module (20) of the first switch (2), placing a broadcast request in one field of said call request packet, and
· placing the block of information to be broadcast in the data packets of the X.25 virtual circuit set up between said first terminal and the broadcast module in response to said call request packet.

2. A method of transmitting data in which, to broadcast a block of information from a first terminal (12) to a set of destination second terminals, each of which second terminals is connected to a switch (2 to 11) of a network, the method consisting of:
- transmitting the block of information from the first terminal to a broadcast module (20) in a first switch (2) which is connected directly to said first terminal,
- broadcasting said block of information from said broadcast module to switches (3 to 11) adjacent said first switch and to destination second terminals which are connected directly to said first switch, and
- receiving said block of information in the destination second terminals,
**characterized in that**, to transmit a block of information from the first terminal to the broadcast module, the method further consists of:
sending a call request packet from the first terminal (12) to the broadcast module (20) of the first switch (2) to request the setting up of an X.25 virtual circuit between said first terminal (12) and the broadcast module (20) of the first switch (2), placing a broadcast request in one field of said call request packet, and
placing the block of information to be broadcast in the user data field of said call request packet.

3. A method according to claim 1 or claim 2, **characterized in that** it further consists of setting up an X.25 link between the broadcast module (20) of the first switch (2) and each of the broadcast modules of the adjacent switches (3 to 11).

4. A method according to any one of claims 1 to 3, **characterized in that** the broadcast module (20) of each switch tests whether an adjacent switch has already received a block of information to be broadcast before sending the block to it.

5. A method according to any one of claims 1 to 4, **characterized in that** it consists of broadcasting a block of information to a second terminal connected to a switch adjacent the first switch if and only if said second terminal belongs to an expected category.

6. A method according to any one of claims 1 to 4, **characterized in that** it consists of broadcasting a block of information to a second terminal connected directly to the first switch if and only if said second terminal belongs to an expected category.

7. A method according to claim 5 or claim 6, **characterized in that** the expected category is that to which the first terminal belongs.

8. A method according to claim 5 or claim 6, **characterized in that** it further consists of sending from the first terminal to the switch to which it is connected a message indicating the category to which said first terminal belongs.

9. A method according to any one of claims 1 to 8, **characterized in that** at least one of the terminals is external relative to the switches (2 to 11).

10. A broadcast module (20) for a network including network switches (2 to 11) and terminals (12) connected to said switches, said switches and said terminals being adapted to set up X.25 links between them to transmit data and said switches including broadcast modules which receive blocks of information to be broadcast to all the terminals of a set of terminals and whose function is to transmit said blocks of information to all the switches which are adjacent then in the network and to all the terminals which are respectively connected directly to them,
**characterized in that** it includes:
- means for receiving a call request packet sent by a first terminal (12) to said broadcast module (20), recognizing a broadcast request in one field of said call request packet, and then setting up an X.25 virtual circuit between said first terminal (12) and the broadcast module (20), and
- means for storing and then broadcasting a block of information to be broadcast that has been placed in the data packets of the X.25 virtual circuit set up between said first terminal and the broadcast module.

11. A broadcast module (20) for a network including network switches (2 to 11) and terminals (12) connected to said switches, said switches and said terminals being adapted to set up X.25 links between them to transmit data and said switches including broadcast modules which receive blocks of information to be broadcast to all the terminals of a set of terminals and whose function is to transmit said blocks of information to all the switches which are adjacent then in the network and to all the terminals which are respectively connected directly to them,
**characterized in that** it includes:
· means for receiving a call request packet sent by a first terminal (12) to said broadcast module (20), recognizing a broadcast request in one field of said call request packet, and
· means for storing and then broadcasting a block of information to be broadcast that has been placed in the user data field of said call request packet.

12. A broadcast module according to claim 10 or claim 11, **characterized in that** it further includes means for determining whether a switch adjacent the switch to which it belongs has already received said block of information to be broadcast.

13. A terminal for a network including network switches and terminals connected to said switches, said switches and said terminals being adapted to set up X.25 links between them to transmit data and said switches including broadcast modules which receive data to be broadcast to all the terminals of a set of terminals and whose function is to transmit said data to all the switches which are adjacent then in the network, **characterized in that** it includes means for:
sending a call request packet from said first terminal (12) to the broadcast module (20) of a first switch (2) to request the setting up of an X.25 virtual circuit between said first terminal (12) and the broadcast module (20) of the first switch (2), placing a broadcast request in one field of said call request packet, and
placing the block of information to be broadcast in the data packets of the X.25 virtual circuit set up between said first terminal and the broadcast module.

14. A terminal for a network including network switches and terminals connected to said switches, said switches and said terminals being adapted to set up X.25 links between them to transmit data and said switches including broadcast modules which receive data to be broadcast to all the terminals of a set of terminals and whose function is to transmit said data to all the switches which are adjacent then in the network, **characterized in that** it includes means for:
· sending a call request packet from said first terminal (12) to the broadcast module (20) of a first switch (2) to request the setting up of an X.25 virtual circuit between said first terminal (12) and the broadcast module (20) of the first switch (2), placing a broadcast request in one field of said call request packet, and
placing the block of information to be broadcast in the user data field of said call request packet.

## Patentansprüche

1. Verfahren zur Übertragung von Daten, bei dem zum Rundfunken eines Informationsblocks von einem ersten Endgerät (12) zu einem Komplex aus zweiten Empfängergeräten jedes zweite Endgerät mit einem Schalter (2 bis 11) eines Netzes verbunden ist, darin bestehend, dass:
- der Informationsblock vom ersten Endgerät an ein Rundfunkmodul (20) übertragen wird, das in einem ersten Schalter (2) enthalten ist, der unmittelbar mit diesem ersten Endgerät verbunden ist,
- dieser Informationsblock von diesem Rundfunkmodul an Schalter (3 bis 11) übertragen wird, die an diesen ersten Schalter angrenzend sind, und zu zweiten Empfängergeräten, die direkt mit diesem ersten Schalter verbunden sind,
- und dieser Informationsblock in den zweiten Empfängergeräten empfangen wird,
**dadurch gekennzeichnet, dass** es zum Übertragen eines Informationsblocks vom ersten Endgerät an das Rundfunkmodul darin besteht:
- ein Paket Anrufanforderung vom ersten Endgerät (12) zum Rundfunkmodul (20) des ersten Schalters (2) zu senden, um den Aufbau einer virtuellen Verbindung vom Typ X25 zwischen diesem ersten Endgerät (12) und dem Rundfunkmodul (20) des ersten Schalters (2) anzufordern, wobei eine Rundfunkanforderung in einem der Felder dieses Pakets Anrufanforderung angeordnet wird;
- und den Informationsblock, der rundgefunkt werden soll, in den Datenpaketen der virtuellen Verbindung vom Typ X25 anzuordnen, die zwischen diesem ersten Endgerät und dem Rundfunkmodul aufgebaut wurde als Antwort auf dieses Anrufanforderungspaket.

2. Verfahren zur Übertragung von Daten, bei dem zum Rundfunken eines Informationsblocks von einem ersten Endgerät (12) zu einem Komplex aus zweiten Empfängergeräten jedes zweite Endgerät mit einem Schalter (2 bis 11) eines Netzes verbunden ist, darin bestehend, dass:
- der Informationsblock vom ersten Endgerät an ein Rundfunkmodul (20) übertragen wird, das in einem ersten Schalter (2) enthalten ist, der unmittelbar mit diesem ersten Endgerät verbunden ist,
- dieser Informationsblock von diesem Rundfunkmodul an Schalter (3 bis 11) übertragen wird, die an diesen ersten Schalter angrenzend sind, und zu zweiten Empfängergeräten, die direkt mit diesem ersten Schalter verbunden sind,
- und dieser Informationsblock in den zweiten Empfängergeräten empfangen wird,
**dadurch gekennzeichnet, dass** es zum Übertragen eines Informationsblocks vom ersten Endgerät an das Rundfunkmodul darin besteht:
- ein Paket Anrufanforderung vom ersten Endgerät (12) zum Rundfunkmodul (20) des ersten Schalters (2) zu senden, um den Aufbau einer virtuellen Verbindung vom Typ X25 zwischen diesem ersten Endgerät (12) und dem Rundfunkmodul (20) des ersten Schalters (2) anzufordern, wobei eine Rundfunkanforderung in einem der Felder dieses Pakets Anrufanforderung angeordnet wird;
- und den Informationsblock, der rundgefunkt werden soll, in dem Feld Benutzerdaten dieses Anrufanforderungspakets anzuordnen.

3. Verfahren gemäß einem der Ansprüche 1 oder 2, **dadurch gekennzeichnet, dass** es außerdem darin besteht, eine Verbindung vom Typ X25 zwischen dem Rundfunkmodul (20) des ersten Schalters (2) und jedem der Rundfunkmodule der angrenzenden Schalter (3 bis 11) aufzubauen.

4. Verfahren gemäß einem der Ansprüche 1 bis 3, **dadurch gekennzeichnet, dass** das Rundfunkmodul (20) jedes Schalters prüft, ob ein angrenzender Schalter einen Informationsblock, der rundgefunkt werden soll, bereits empfangen hat, bevor er ihn an diesen übersendet.

5. Verfahren gemäß einem der Ansprüche 1 bis 4, **dadurch gekennzeichnet, dass** es darin besteht, einen Informationsblock an ein zweites Endgerät rundzufunken, das mit einem an den ersten Schalter angrenzenden Schalter verbunden ist, wenn und nur wenn dieses zweite Endgerät einer erwarteten Kategorie angehört.

6. Verfahren gemäß einem der Ansprüche 1 bis 4, **dadurch gekennzeichnet, dass** es darin besteht, einen Informationsblock an ein zweites Endgerät rundzufunken, das unmittelbar mit dem ersten Schalter verbunden ist, wenn und nur wenn dieses zweite Endgerät einer erwarteten Kategorie angehört.

7. Verfahren gemäß einem der Ansprüche 5 oder 6, **dadurch gekennzeichnet, dass** die erwartete Kategorie diejenige Kategorie ist, zu der das erste Endgerät gehört.

8. Verfahren gemäß einem der Ansprüche 5 oder 6, **dadurch gekennzeichnet, dass** es außerdem darin besteht, vom ersten Endgerät zum Schalter, mit dem es verbunden ist, eine Meldung zu senden, die die Kategorie angibt, zu der dieses erste Endgerät gehört.

9. Verfahren gemäß einem der Ansprüche 1 bis 8, **dadurch gekennzeichnet, dass** mindestens eines der Endgeräte bezogen auf die Schalter (2 bis 11) extern ist.

10. Rundfunkmodul (20) für ein Netz, das Netzschalter (2 bis 11) und mit diesen Schaltern verbundene Endgeräte (12) enthält, wobei diese Schalter und diese Endgeräte in der Lage sind, untereinander Verbindungen des Typs X25 aufzubauen, um Daten zu übertragen; diese Schalter enthalten Rundfunkmodule, die Informationsblöcke empfangen, die an alle Endgeräte eines Komplexes Endgeräte rundgefunkt werden sollen, und deren Funktion darin besteht, diese Informationsblöcke an alle an sie angrenzenden Schalter im Netz zu übertragen, und an alle Endgeräte, die mit ihnen jeweils direkt verbunden sind;
**dadurch gekennzeichnet, dass** es folgendes enthält.
- Mittel zum Empfangen eines Anrufanforderungspaketes, gesendet von einem ersten Endgerät (12) an dieses Rundfunkmodul (20), zum Erkennen einer Rundfunkanforderung in einem der Felder dieses Anrufanforderungspaketes, und dann zum Aufbauen einer virtuellen Verbindung vom Typ X25 zwischen diesem ersten Endgerät (12) und dem Rundfunkmodul (20);
- und Mittel zum Speichern und anschließenden Rundfunken eines Informationsblocks, der rundgefunkt werden soll und in den Datenpaketen der virtuellen Verbindung vom Typ X25 angeordnet wurde, die zwischen diesem ersten Endgerät und dem Rundfunkmodul aufgebaut wurde.

11. Rundfunkmodul (20) für ein Netz, das Netzschalter (2 bis 11) und mit diesen Schaltern verbundene Endgeräte (12) enthält, wobei diese Schalter und diese Endgeräte in der Lage sind, untereinander Verbindungen des Typs X25 aufzubauen, um Daten zu übertragen; diese Schalter enthalten Rundfunkmodule, die Informationsblöcke empfangen, die an alle Endgeräte eines Komplexes Endgeräte rundgefunkt werden sollen, und deren Funktion darin besteht, diese Informationsblöcke an alle an sie angrenzenden Schalter im Netz zu übertragen, und an alle Endgeräte, die mit ihnen jeweils direkt verbunden sind;
**dadurch gekennzeichnet, dass** es folgendes enthält.
- Mittel zum Empfangen eines Anrufanforderungspaketes, gesendet von einem ersten Endgerät (12) an dieses Rundfunkmodul (20), zum Erkennen einer Rundfunkanforderung in einem der Felder dieses Anrufanforderungspaketes,
- und Mittel zum Speichern und anschließenden Rundfunken eines Informationsblocks, der rundgefunkt werden soll und im Feld Benutzerdaten dieses Anrufanforderungspaketes angeordnet wurde.

12. Rundfunkmodul gemäß Anspruch 10 oder Anspruch 11, **dadurch gekennzeichnet, dass** es außerdem Mittel enthält, um festzustellen, ob ein Schalter, der an den Schalter angrenzt, zu dem es gehört, bereits diesen Informationsblock, der rundgefunkt werden soll, empfangen hat.

13. Endgerät für ein Netz, das Netzschalter enthält und Endgeräte, die mit diesen Schaltern verbunden sind, wobei diese Schalter und diese Endgeräte in der Lage sind, untereinander Verbindungen des Typs X25 aufzubauen, um Daten zu übertragen, Schalter Rundfunkmodule enthalten, die Daten empfangen, die an alle Endgeräte eines Komplexes Endgeräte rundgefunkt werden sollen, und deren Funktion darin besteht, diese Daten, die rundgefunkt werden sollen, an alle an sie angrenzenden Schalter im Netz zu übertragen; **dadurch gekennzeichnet, dass** es Mittel enthält.
- zum Senden eines Anrufanforderungspaketes von diesem ersten Endgerät (12) an das Rundfunkmodul (20) eines ersten Schalters (2), um den Aufbau einer virtuellen Verbindung des Typs X25 zwischen diesem ersten Endgerät (12) und dem Rundfunkmodul (20) des ersten Schalters (2) anzufordern, wobei eine Rundfunkanforderung in einem der Felder dieses Anrufanforderungspaketes angeordnet wird;
- und zum Anordnen des Informationsblocks, der rundgefunkt werden soll, in den Datenpaketen der virtuellen Verbindung vom Typ X25, die dann zwischen diesem ersten Endgerät und dem Rundfunkmodul aufgebaut ist.

14. Endgerät für ein Netz, das Netzschalter enthält und Endgeräte, die mit diesen Schaltern verbunden sind, wobei diese Schalter und diese Endgeräte in der Lage sind, untereinander Verbindungen des Typs X25 aufzubauen, um Daten zu übertragen, Schalter Rundfunkmodule enthalten, die Daten empfangen, die an alle Endgeräte eines Komplexes Endgeräte rundgefunkt werden sollen, und deren Funktion darin besteht, diese Daten, die rundgefunkt werden sollen, an alle an sie angrenzenden Schalter im Netz zu übertragen; **dadurch gekennzeichnet, dass** es Mittel enthält.
- zum Senden eines Anrufanforderungspaketes von diesem ersten Endgerät (12) an das Rundfunkmodul (20) eines ersten Schalters (2), um den Aufbau einer virtuellen Verbindung des Typs X25 zwischen diesem ersten Endgerät (12) und dem Rundfunkmodul (20) des ersten Schalters (2) anzufordern, wobei eine Rundfunkanforderung in einem der Felder dieses Anrufanforderungspaketes angeordnet wird;
- und zum Anordnen des Informationsblocks, der rundgefunkt werden soll, im Feld Benutzerdaten dieses Anrufanforderungspaketes.
